# EUROPEAN PATENT APPLICATION

(11) **EP 4 353 342 A1**
(43) Date of publication of application: **17.04.2024**
(21) Application number: 22201738.6
(22) Date of filing: 14.10.2022
(51) Int. Cl.: A63F 13/214, A63F 13/24

(54) **A CONTROLLER CONNECTION MECHANISM**

(71) Applicant: Byowave Ltd, H91H6KA Salthill Galway (IE)
(72) Inventor: Blacoe, Brandon, Salthill (IE)
(74) Representative: Tomkins & Co

(57) **Abstract**

A controller connection mechanism is provided comprising a first connector element; a first locking element; a rotatable element integrated with the first locking element such that the first connector element is configurable between a locked configuration and an unlocked configuration by rotation of the rotatable element relative to the first connector element.

## Description

### Field of the Invention

The present invention relates to a connection mechanism for an electronic device. In particular, it relates to connection mechanism for a controller for video game system.

### Background

Games systems and PC gaming have been consistently popular for many years.

There are several generic gaming controllers available on the market today.

These are predominantly wireless, two-handed controllers which have fixed button positions. Examples of these include Microsoft Xbox ^{®} Wireless Controller, Sony PlayStation DualSense ^{®}, Microsoft Xbox Elite Wireless Controller Series Two ^{®}. Xbox Adaptive Controller ^{®} was released as a gamepad to which peripherals can be attached at input pins to allow for customisation.

However, these generic controllers present major disadvantages to certain users, for example, users with disabilities. Although the Xbox Adaptive Controller provides some versatility to users, it takes up a very large surface area, is sold separately to external buttons and the gamepad itself isn't modular or customisable. Furthermore, this controller is not handheld and requires the use of multiple elements to be connected by wires to a central control box, the box itself being quite large and bulky.

The Applicant's research has found that 180 million disabled gamers do not get to engage in video games as much as they would like, or sometimes at all, due to the lack of accessible controllers. In a world that is moving toward virtual reality more and more every day, it is evident that this is only going to become more problematic.

As the population growing up in the digital generation is getting older, more and more people will need accessible input devices due to age related impairments such as arthritis. In addition to the increased demand from disabled gamers, professional gaming is another area that would benefit from greater levels of customisation of controllers. The pro gaming space is getting increasingly competitive, with increasing amounts of lucrative prizes at stake. Fine margins define success in this industry, such that the current "one size fits all" approach to controllers is not satisfactory. The controller is the most critical piece of equipment for pro gamers; it is the interface between human and computer. The ability to improve reaction speed by tiny amounts through the customization and personalization of a pro-gamer's controller could potentially have significant implications.

A mechanism for a controller which provides for a secure connection and ready attachment and detachment of controller components and modules would be an improvement over the state of the art. In addition to games controllers, such a mechanism would have wide application to all types of electronic controllers such as controllers for general computer and electronic equipment as well as industrial machinery.

### Summary

The present invention provides a controller connection mechanism comprising:
a first connector element; a first locking element; a rotatable element integrated with the first locking element such that the connection mechanism is configurable between a locked configuration and an unlocked configuration by rotation of the rotatable element relative to the first connector element.

This is advantageous as it provides for secure connection between different modules and/or input devices in a controller, for example, a games controller. For example, where a controller comprises a number of different functional modules and/or input devices, such devices may be linked or connected together to provide a single integrated handheld device. The connection mechanism as described provides for the connecting of such module and/or input devices. Rotation of the rotatable element provides an intuitive and ergonomic solution to move the connection mechanism between an unlocked and locked configuration.

The connection mechanism may further comprise a second connector element configured to be connectable to the first connector element. The second connector element may be integrated into a second controller module and/or input device while the first connector element may be integrated into a first controller module and/or input device. In this manner, by providing that the second connector element is configured to be connectable to the first connector element, the first and second controller modules and/or input devices may be connected together.

Upon bringing the first connector element into contact with the second connector element, the locked configuration retains contact between the first connector element and the second connector element; and the unlocked configuration releases contact between the first connector element and the second connector element. The unlocked configuration provides that the first connector element may be open to connection to a further second connector element. Furthermore, when in connection with a second connector element, the unlocked configuration provides for release of the second connector element from the first connector element. The locked configuration provides for secure retention on the first connector element to, for example, a second connector element.

The first connector element, the first locking element and the rotatable element may be annular elements; wherein the annular elements are overlaid in a stack configuration. This provides for a compact connection mechanism which may be easily integrated into devices intended for connection.

The second connector element of the connection mechanism is an annular element configured to be connectable to the first connector element in the stack configuration. By providing both the second connector element and the first connector element as annular elements, this provides that a second connector element may be readily connected or married to the first connector element. The second connector element and the first connector element may be provided as annular elements of corresponding diameter such to provide for ease of engagement.

The first connector element of the connection mechanism may comprise a first plurality of teeth; the locking element of the connection mechanism may comprise a second plurality of teeth and the second connector element of the connection mechanism may comprise a third plurality of teeth. In the unlocked configuration the first and second plurality of teeth may be aligned relative to each other; and in the locked configuration the first and second plurality of teeth are misaligned relative to each other. Providing teeth on each of the connector elements and the locking element allows for alignment and misalignment of the teeth on the different elements to produce a locking and unlocking effect.

Upon bringing the first connector element into contact with the second connector element, the unlocked configuration may provide that the third plurality of teeth of the second connector element fit between the first plurality of teeth of the first connector element to allow separation of the first connector element and the second connector element. The locked configuration may provide, upon rotation of the rotatable element relative to the first connector element, that the teeth of the second connector are retained by the teeth of the first locking element to prevent separation of the first connector element and second connector element.

For example, aligning gaps in the teeth on first connector element with the teeth of a second connector element provides that the elements may readily engage with each other, i.e. the teeth of the second connector element slot into the gaps between the teeth of the first connector element and the teeth of the first locking element. Once aligned in this manner, rotation of the rotatable element to the locked configuration provides for retaining of the teeth of the second connector element beneath the teeth of the first locking element. This provides for a friction type locking fit between the teeth of the second connector element and the teeth of the first locking element. Rotation of the rotatable element in the opposite direction provides for moving the first plurality of teeth of the first locking element away from the top surface of the third plurality of teeth of the second connector element. As such, the teeth of the second connector element are no longer retained or "held" beneath the teeth of the locking element. This allows the first connector element and the second connector element to be separated.

Both the first plurality of teeth and the second plurality of teeth may comprise 12 teeth. This provides an optimum balance between ease of fabrication of the elements while still providing for a secure connection.

The rotation of the rotational element of the connection mechanism may be through an arc of at least 15 degrees. This provides a sufficient arc of rotation for the teeth to move between the unlocked configuration for release and the locked configuration.

The connection mechanism may further comprising a cap element and the cap element may comprise at least one of a printed circuit board, PCB connection or a Universal Serial Bus, USB connection. The cap element protects the connection mechanism from external knocks or blows. Furthermore, the cap may provide for additional connection to external devices via a PCB or USB connection. As such, the cap provides for additional versatility of connection.

A modular controller for communication with an electronic device is provided comprising a first multi-faced module comprising a connection mechanism for releasable attachment to one or more additional modules; wherein the connection mechanism comprises: a first connector element; a first locking element; a rotatable element integrated with the first locking element such that the connection mechanism is configurable between a locked configuration and an unlocked configuration by rotation of the rotatable element relative to the first connector element. This provides for connection of modules of a modular controller via the connection mechanism.

The connection mechanism of the modular controller may further comprise a second connector element configured to be connectable to a first connector element of the one or more additional modules.

The first connector element, first locking element and the rotatable element may be integrated into at least a first face of a first module and a second connector element may be integrated into at least a second face of the first module. As such, a given module is provided with a first connector element on at least one face and a second connector element on at least one other face. A module may also comprise a first connector on multiple faces. Similarly, a module may also comprise a second connector on multiple faces. In a particular example, a first connector element is provided on five faces of a module and a second connector element is provided on one face of a module. In this manner, a module is provided with the capability to connect with both a first connector element and a second connector element of an additional module. For example, a module A may connect to a module B via a first connector element on module A and a second connector element on module B. Similarly, a module A may connect to a module B via a second connector element on module A and a first connector element on module B.

At least a first module may be attached to at least one additional module via connection between a first connector element of the first module and a second connector element of the at least one additional module. This provides for a connection between a first module and at least one additional module. Further modules may then be attached to the first module and/or to the at least one additional module.

### Description of the Drawings

**Figure 1** is an exploded perspective view of the connection mechanism viewed
**Figure 2A** is top down view of the connection mechanism in the unlocked configuration
**Figure 2B** is a perspective representation of the connection mechanism in the unlocked configuration
**Figure 2C** is a top down view of the connection mechanism in the locked configuration
**Figure 2D** is a perspective representation of the connection mechanism in the locked configuration
**Figure 3A** is a topside perspective representation of the second connector element
**Figure 3B** is an underside perspective representation of the second connector element.
**Figure 3C** is a representation of the second connector element being moved towards a first connector element for connection to the first connection element.
**Figure 4A** is a top down view of the second connector element connected to the first connector element in the unlocked configuration
**Figure 4B** is a perspective representation of the unlocked configuration between first and second connectors
**Figure 4C** is a top down view of the second connector element connected to the first connector element in the locked configuration

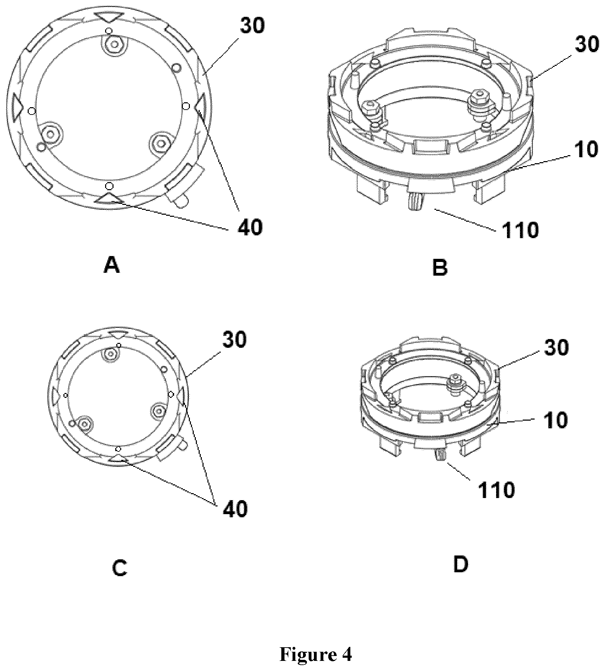

**Figure 4B** is a perspective representation of the locked configuration between first and second connectors

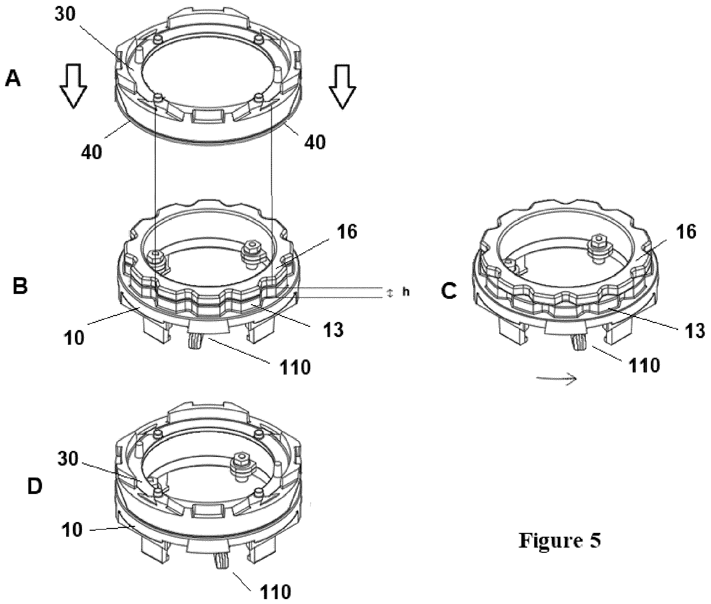

**Figure 5A** is one of a series of representations showing the second connector being connected to the first connector
**Figure 5B** is one of a series of representations showing the second connector being connected to the first connector
**Figure 5C** is one of a series of representations showing the second connector being connected to the first connector
**Figure 5D** is one of a series of representations showing the second connector being connected to the first connector

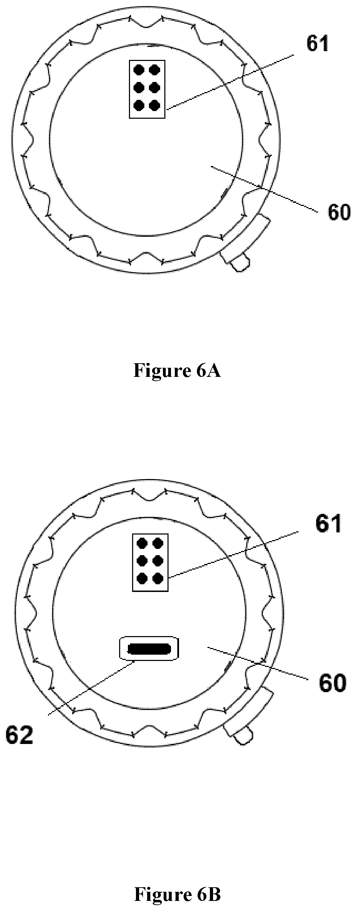

**Figure 6A** is a representation of the cap element including a PCB connection
**Figure 6B** is a representation of the cap element including a PCB and USB connection

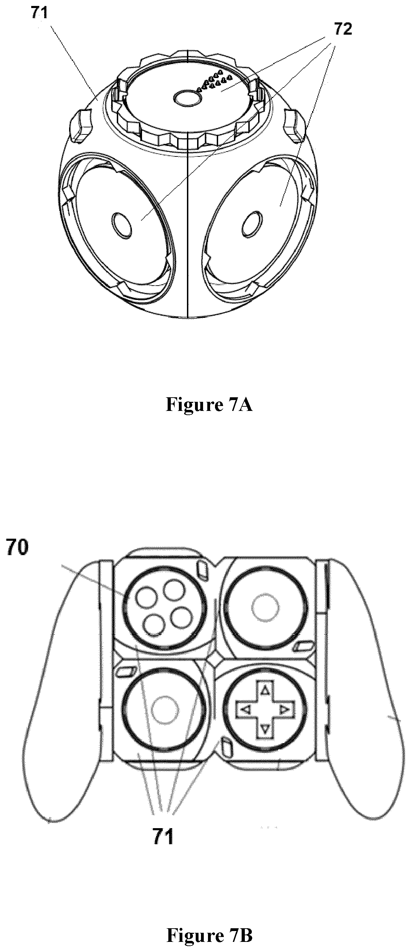

**Figure 7A** shows a multi-faced module for forming a modular controller
**Figure 7B** is a schematic representation of a games controller with modules and input devices connected via the connection mechanism

### Detailed Description

The invention will now be described with reference to the accompanying figures.

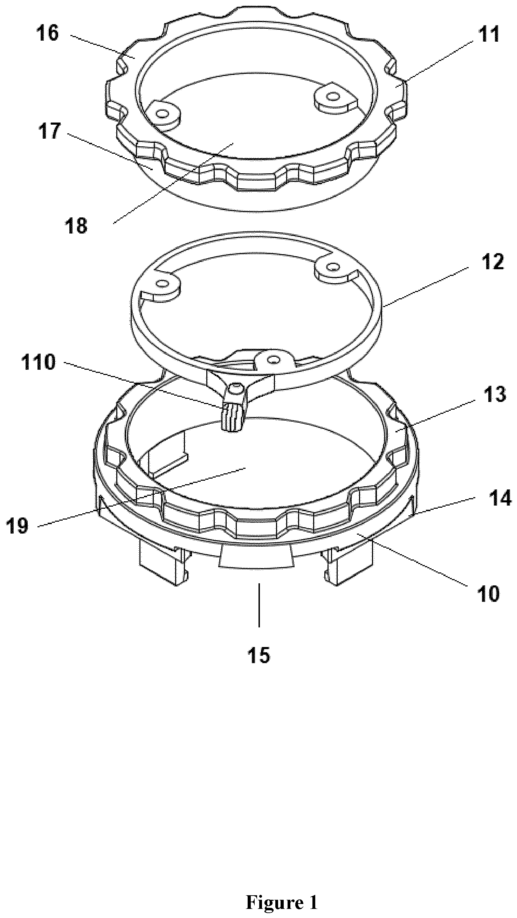

**Figure 1** is an exploded perspective view of the connection mechanism.. The figure shows three components of the connection mechanism.

A first connector element 10 is shown along with a first locking element 11 and a rotatable element 12 integrated with the first locking element 11 such that the connection mechanism is configurable between a locked configuration and an unlocked configuration by rotation of the rotatable element 12 relative to the first connector element 10.

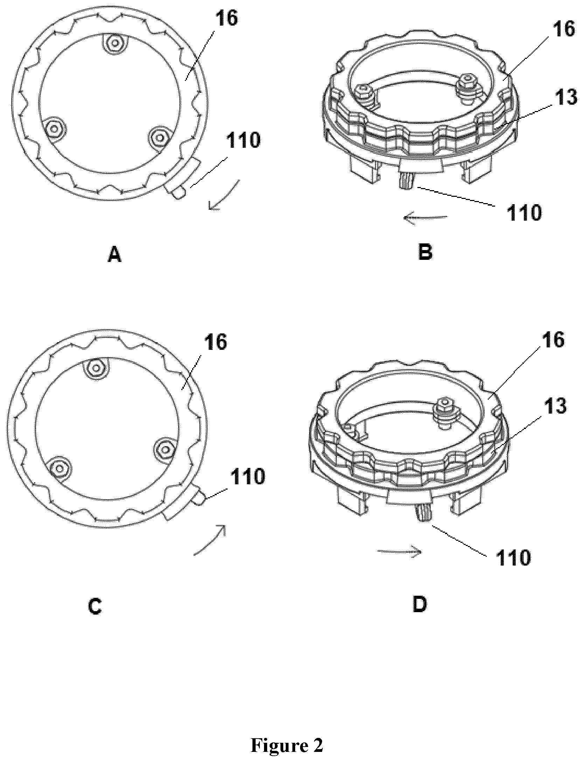

The first connector element 10 is shown as an annular shape with a top opening comprising a series of protrusions 13 or teeth about the top diameter and a raised flange 14 on the bottom surface. Twelve teeth are shown which have the effect of allowing connection of a second connector element (See Figure 4) at one of twelve angles. A gap or channel 15 is provided in the flange to allow for protrusion of the first locking element 11 (described further below.) The first locking element 11 also has a series of series of protrusions 16 or teeth on the top surface and a raised flange 17 on the bottom surface forming a circular bottom opening 18. The flange of the first locking element is dimensioned to be accepted into the top opening 19 of the first connector element. The rotatable element 12 comprises an annular element with a protrusion or slider 110 on the outer circumference. The rotatable element is dimensioned to be accepted into the bottom of the connector element 10. When in such a position, i.e. in the bottom opening of the connector element, the slider of the locking element resides in the gap or channel 15 of the connector element. The slider is moveable in the gap to move the connection mechanism from an unlocked to a locked position configuration as will be described in further detail below. The exploded view of Figure 1 shows the rotatable element 12 between the first connector element 10 and the first locking element 11. However, when constructed, the rotatable element 12 resides below the first connector element and is connected to the first locking element 11 through the opening of the first connector element 10. Hence, when the connection mechanism is constructed, the first connector element 10 is sandwiched between the rotatable element 12 and the first locking element 11. This configuration will be described in more detail with reference to Figures 2A to 2D below. The rotatable element 12 may be connected to the first locking element via a nut and bolt connection. Openings are provided in the rotatable element 12 and the first locking element 11 for this purpose.

**Figure 2A** is top down view of the connection mechanism in the unlocked configuration while **Figure 2B** is a perspective representation of the connection mechanism in the unlocked configuration.

Figure 2B shows the first connector element, a first locking element and rotatable element overlaid each other in a stack configuration. The stack forms the connection mechanism allowing for mechanical connection of devices. However, as the mechanism is for use with controllers of electronic devices, consideration must be provided for electronic connection of devices in addition to the mechanical connection provided by the connection mechanism. Accordingly, the central region of the mechanism provides a circular void. This provides spacing to house internal electronics, for example USB-C and Pogo Pins, for electronic connection of devices.

The rotatable element is integrated with the first locking element with the connector element sandwiched between the rotatable element and first locking element. The slider 110 is thus visible to the user but the body of the rotatable element resides inside the bottom part of the first connector element. In such a configuration, the slider is moveable in the gap of the of the connector element 10. This has the effect of moving the teeth 16 of the first locking element relative to the teeth 13 of the connector element. The gap is provided as a 15-degree arc on the circumference of the bottom of the first connector element. The limit of rotation of the rotatable element is therefore 15 degrees between each side of this gap. This short path of rotation provides for movement of the mechanism between and locked and unlocked configuration in a quick and robust manner.

Figure 2A and 2B shows a first position of the slider 110 wherein the teeth 13 of the connector element and the teeth 16 of the locking element are aligned. Thus, in this position, the mechanism is considered to be in an unlocked configuration. **Figure 2C and 2D** show a second position of the slider 110 after being rotated from the first position (i.e. rotated in the direction of the arrow as shown in Figure 2C and 2D). Here, the teeth 13 of the connector element and the teeth 16 of locking element are out of alignment or mis-aligned. In this position, the mechanism is considered to be in a locked configuration. The mechanism can be moved back to the unlocked positon by movement of the slider 110 in the direction of the arrow shown n Figure 2A and 2B. The locked or unlocked configuration can be understood further when described in conjunction with a second connector element.

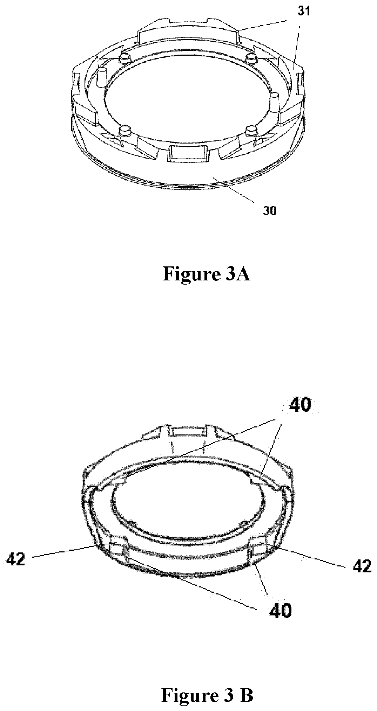

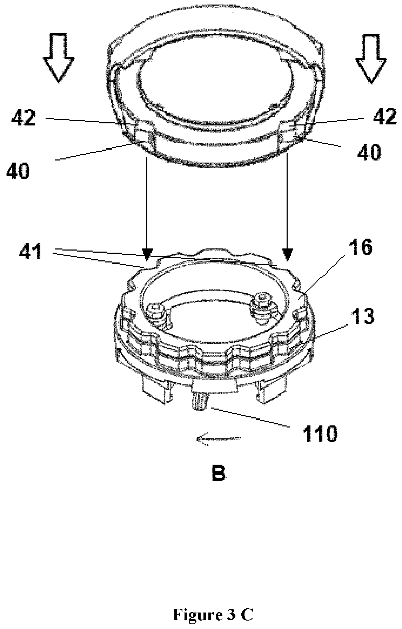

A second connector element 30 is shown in **Figure 3A, 3B** **and** **3C****.** **Figure 3A** is a top down perspective representation of the second connector element. The second connector element is an annular element. A number of protrusions 31 are seen on the top surface of the connector element. These provide for connection to the surface of a module of a modular controller (not shown). **Figure 3B** is an underside perspective view of the second connector element. This surface of the second connector element is brought into contact with the locking element, which in turn is connected to the first connector element. A number of teeth 40 are shown on the underside of the second connector element. Four teeth are shown in the example but further configurations are possible. In the unlocked configuration of the connection mechanism, these teeth slot into the gaps 41 between the teeth 16 of the locking element and the teeth 13 of the first connector element. This is shown by the arrows in **Figure 3C****,** which is a representation of the second connector element being moved towards a first connector element for connection to the first connection element. As shown, with the mechanism in the unlocked configuration (with the slider 110 in position 'B' as shown), the teeth of the second connector element may slot into the gaps 41 between the teeth 16 of the locking element and the teeth 13 of the first connector element. It should be noted that the teeth 40 of the second connector element do not extend to the full height of the inner wall of the connector. As such, a series of gaps 42 is provided about the underside circumference of the second connector element adjacent to and above the teeth 40. These gaps 42 allow the teeth 16 of the locking element to move over the teeth 40 of the second connector element upon rotation of the locking element to the locked configuration. In effect, the teeth 40 of the second connector element are held or retained in place by the underside surface of the teeth 16 of the locking element in the locked configuration. The transition from the unlocked to the locked configuration now explained further.

**Figure 4A** is a top down view representation of the second connector element 30 connected to the first connector element 10 in the unlocked configuration, i.e. once the movement as shown in Figure 3C has brought the first and second connector elements into contact together **Figure 4B** is a perspective representation of this unlocked configuration between first 10 and second 30 connectors. **Figure 4C** is a top down view of the second connector element connected to the first connector element in the locked configuration. **Figure 4D** is a perspective representation of the locked configuration between first and second connectors. The transition from the unlocked to the locked configuration will now be described.

The second connector element is configured to be connectable to the first connector element. This mode of connection is described with respect to **Figure 5A, Figure 5B, Figure 5C and Figure 5D.** Figure 5A shows a second connector element 30 while Figure 5B shows a first connector element 10 to which the second connector 30 is to be attached. Figure 5B shows that the first connector 10 is in the unlocked configuration and is ready to receive the second connector 30. The second connector may be brought into contact with the first connector by moving the second connector in the direction shown by the arrows of Figure 5A. This has the effect of moving the teeth 40 of the second connector element 30 into the gaps 41 between the teeth 13 of the first connector and the teeth 16 of the locking element, i.e. when the second connector is placed in contact with the first connector in this manner, the teeth (not visible in Figure 5 A but located second connector element as marked by numeral 40) of the second connector occupy the gap or space between the teeth of the the teeth 13 of the first connector and the teeth 16 of the locking element. The upper and lower bounds of this space are depicted by "h" in Figure 5B. Note that this provides that the teeth 40 of the second connector reside below the teeth 16 of the locking element.. In this position, moving the slider 110 to the position as shown in Figure 5C, then has the effect of changing the connection mechanism from the unlocked to the locked configuration. In the locked configuration, the teeth 40 of the second connector are thus held underneath the teeth 16 of the first locking element. This prevents a pulling or separating force applied to the outer surfaces of the first and second connectors from disconnecting the first and second connectors from each other. In effect, this keeps the first and second connectors connected or "locked" together. The connected first and second elements are shown in Figure 5D in the locked configuration. Moving the slider 110 back to the position as shown in Figure 5B "releases" the teeth 40 of the second connector from beneath the teeth 16 of the locking element. This allows the first and second connectors to be separated or "unlocked" from each other. Thus, it should be apparent that if the first connector element is integrated into a first device and the second connector element is integrated into a second device, the first and second device may be held together in the locked configuration and released from each other in the unlocked configured. The first and second devices may be modules of a controller for an electronic device. The first and second devices may be modules of a games controller. The first and second modules may be input devices of a controller for an electronic device. Furthermore, the first and second modules may be input devices of a games controller. Modules may be attached to additional modules by the connection described. Similarly, modules may be connected to input devices by the connection described. Examples of input devices include one more of a joystick, mini-joystick, a button, a multi-button, a trigger or a multi-trigger. A module may be considered to be a device either housing or capable of housing one or more input devices.

As noted above, the stack forms the connection mechanism allowing for mechanical connection of devices. However, as the mechanism is for use with electronic controllers, consideration must be provided for electronic connection of devices in addition to the mechanical connection provided by the connection mechanism.

Accordingly, the central region of the mechanism provides a circular void. This provides spacing to house internal electronics, for example USB-C and pogo pins. The USB and pogo pin interfaces provide for electronic connection between devices.

**Figure 6A** is a representation of a cap element 60 integrated into the connection mechanism. The cap includes a PCB connection 61 while electronics linked to the PCB connection may be housed in the circular void of the mechanism. **Figure 6B** shows an alternative arrangement wherein the cap comprises a PCB 61 and USB 62 connection

**Figure 7A** shows a multi-faced module 71 for forming a modular controller. One or more of the faces 72 of the multi-faced module may comprise first or second connector elements as described. **Figure 7B** shows an example of games controller 70 with a number of multi-faced modules 71 connected via the connection mechanism as described above. Each of the modules may have the connection mechanism as described integrated on one or more faces. Thus, bringing a first connection element of a first module into contact with a second connection element of a second module allow the modules to be connected in the "locked" configuration as described above and subsequently returned to an "unlocked" configuration and separated as described.

Input devices may be connected to the modules in the same manner. It should be clear that a great degree of flexibility is thus provided to the user by the connection mechanism as described to connect and disconnect modules and input devices to suit their gaming needs.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A controller connection mechanism comprising:
a first connector element;
a first locking element;
a rotatable element integrated with the first locking element such that the connection mechanism is configurable between a locked configuration and an unlocked configuration by rotation of the rotatable element relative to the first connector element.

2. The controller connection mechanism of claim 1 further comprising:
a second connector element configured to be connectable to the first connector element.

3. The controller connection mechanism of claim 2 wherein, upon bringing the first connector element into contact with the second connector element,
the locked configuration retains contact between the first connector element and the second connector element; and
the unlocked configuration releases contact between the first connector element and the second connector element.

4. The controller connection mechanism of any preceding claim wherein:
the first connector element, the first locking element and the rotatable element are annular elements; and
wherein the annular elements are overlaid in a stack configuration.

5. The controller connection mechanism of claim 4 wherein the second connector element is an annular element configured to be connectable to the first connector element in the stack configuration.

6. The controller connection mechanism of any of claims 2 to 5 wherein:
the first connector element comprises a first plurality of teeth;
the locking element comprises a second plurality of teeth;
the second connector element comprises a third plurality of teeth.

7. The controller connection mechanism of claim 6 wherein:
in the unlocked configuration the first and second plurality of teeth are aligned relative to each other; and
in the locked configuration the first and second plurality of teeth are misaligned relative to each other.

8. The controller connection mechanism of claim 7 wherein upon bringing the first connector element into contact with the second connector element,
the unlocked configuration providing that the third plurality of teeth of the second connector element fit between the first plurality of teeth of the first connector element and the second plurality of teeth of the locking element to allow separation of the first connector element and the second connector element;
the locked configuration providing, upon rotation of the rotatable element relative to the first connector element, that the third plurality of teeth of the second connector are retained by the second plurality of teeth of the locking element to prevent separation of the first connector element and second connector element.

9. The controller connection mechanism of claim 6 to 8 wherein both the first plurality of teeth and the second plurality of teeth comprise 12 teeth.

10. The controller connection mechanism of claim 1 wherein the rotation of the rotational element is through an arc of at least 15 degrees.

11. The controller connection mechanism of any preceding claim further comprising a cap element, the cap element comprising at least one of a PCB connection or a USB connection.

12. A modular controller for communication with an electronic device comprising:
a first multi-faced module comprising a controller connection mechanism for releasable attachment to one or more additional modules; wherein the connection mechanism comprises:
a first connector element;
a first locking element;
a rotatable element integrated with the first locking element such that the connection mechanism is configurable between a locked configuration and an unlocked configuration by rotation of the rotatable element relative to the first connector element.

13. The modular controller of claim 12 the connection mechanism further comprising a second connector element configured to be connectable to a first connector element of the one or more additional modules.

14. A modular controller according to claim 13, wherein the first connector element, first locking element and the rotatable element are integrated into at least a first face of a first module and a second connector element is integrated into at least a second face of the first module.

15. The modular controller of claim 14 comprising at least a first module attached to at least one additional module via connection between a first connector element of the first module and a second connector element of the at least one additional module.
